# EUROPEAN PATENT SPECIFICATION

(11) **EP 2 039 578 B1**
(45) Date of publication and mention of the grant of the patent: **17.11.2010**
(21) Application number: 07116834.8
(22) Date of filing: 20.09.2007
(51) Int. Cl.: B60W 50/08, B60W 30/08, G08G 1/0962, G09B 9/042

(54) **Procedure, control unit and system for issuing and controlling an olfactory warning**
Verfahren, Steuereinheit und System zum Ausgeben und Steuern einer Geruchswarnung
Procédure, unité de contrôle et système pour émettre et contrôler un avertissement olfactif

(43) Date of publication of application: 25.03.2009
(73) Proprietor: ROBERT BOSCH GMBH, 70442 Stuttgart (DE)
(72) Inventor: Maillard, Patrick, 1005 Lausanne (CH); Bosisio, Francesca, 1022 Chavannes-près-Renens (CH)

(56) References cited:
- DE-A1- 10 030 813
- DE-A1- 10 103 401
- DE-A1- 10 114 433
- DE-A1- 10 153 302
- DE-A1- 10 238 324
- DE-A1- 10 253 192
- DE-A1- 10 309 934
- DE-A1- 10 326 358
- DE-A1- 19 822 017

## Description

### Background of the invention

The present invention relates to a procedure and a control unit for issuing and controlling an olfactory warning. From the US 6,389,332 B1 it is known that for the purpose of relieving and supporting a driver in operating a vehicle a warning in form of a smell is made available. The output information signal as a warning is made available to the occupants of the vehicle, particularly the driver, for the purpose of informing them.

DE 101 03 401 A discloses a procedure for warning a user of a system, comprising the steps of detecting a threat associated with utilization of a system in a first procedural step, issuing a first warning in a second procedural step if a threat has been detected in the first procedural step, the first warning being issued by an olfactory information via emitting a substance of a first intensity, checking whether a user acknowledged the first warning by taking an action in a third procedural step, the result of the checking being used for controlling an issuing of a further warning in a fourth procedural step. DE 103 26 358 A, DE 198 22 017 A, DE 100 30 813 A and DE 101 53 302 A show similar solutions.

### Description of the invention

### Advantages of the invention

The procedure for warning a user of a system according to the invention with the features of the independent claim has in contrast to the prior art the advantage that after issuing a first warning by an olfactory information it is checked whether the user acknowledged the first warning by taking an action in such a way, that the result of the checking is used for further control of outputting a further warning. This is of advantage, since after issuing a first warning by an olfactory information an interaction of the user with the system can be used for the decision whether or not and in which way a further warning should be issued to the user.

It is well known that user of systems, preferably cars, may be warned or alerted by issuing an acoustical, a visual and/or a haptic warning. Due to the risk that the user, preferably a driver of a car, may become resistant to such warnings to which he is exposed in different ways when using a system, the procedure ac-cording to the invention contains the step of issuing an olfactory warning to the user in a way of learning which contains a reinforcement effect. This effect of reinforcement is ensured by checking whether the user acknowledged the olfactory warning by taking an action and furthermore by outputting a further warning depending on the result of the checking. As described in the independent claim the procedure of warning a user of a system comprises different steps. In a first procedural step a threat associated with a utilization of the system is detected. In a second procedural step a first warning is issued if a threat has been detected, whereby the first warning is issued by an olfactory information via emitting a substance of a first intensity. In a third procedural step it is checked whether the user acknowledged the first warning by taking an action. In a fourth procedural step the result of the checking is used for controlling an issuing of a further warning.

According to the dependent claims further advantageous embodiments and improvements of the invention are possible.

According to a further embodiment the invention is developed in such a way, that an emission of any further quantity of the substance is suppressed in a fifth procedural step. This may preferably be done in the case that the user did acknowledge the first warning. This is of advantage, since in this case, the user took notice of the warning and acknowledged it, a further warning is therefore not necessary.

According to a further embodiment of the invention the emission of any further quantity of the substance is suppressed in the fifth procedural step in the case that the initially detected threat is not present any more. This is of advantage, since a further warning will be issued only in the case that it is necessary due to a threat being present.

According to another embodiment of the invention the further warning is issued in the fifth procedural step in the case that the user did not acknowledge the first warning; in this case the further warning is issued via emitting the substance of an increased intensity. This may preferably be done until it is detected that the user acknowledges the first or the further warning. This is of advantage, since in the case that the user did not acknowledge the first warning, he will be alerted of the threat with increasing importance, since the emission of the substance of an increased intensity will cause a stronger reception of the warning for the user.

According to a further embodiment of the invention a visual and/or an acoustic warning is issued in a sixth procedural step. This is done in the case that the user did not acknowledge the first or the further warning. This may preferably be done until it is detected that the user acknowledges the first, the further or the visual/acoustic warning. This is of advantage, since a visual and/or an acoustic warning is a way of alerting the user via a different information channel in the case that the user did not acknowledge the first or the further warning which was issued via the olfactory information channel.

According to a further embodiment of the invention one of the above procedures may be initiated via simulating the detection of a threat associated with a utilization of the system. This is of advantage, since the user may preferably initiate the procedure of issuing a first and/or a further warning himself in order to experience and learn about the procedural steps of the invention without a threat associated with the utilization of the system actually being present.

According to a further embodiment of the invention an additional visual and/or acoustic warning is issued together with the first warning in the second procedural step. This has the advantage that the user may be alerted in a situation of danger via fast information channels such as the visual or the acoustic information channel and that the user will be trained to associate the olfactory warning with a situation of danger.

According to an independent claim, a control unit for undertaking the procedure, according to the invention, is claimed. The claimed control unit has the advantage of the procedure according to the invention for warning a user of a system.

The control unit according to the invention comprises a first interface for connecting the control unit with at least one sensor, a second interface for connecting the control unit with the first output unit, a third interface for connecting the control unit with an input unit, a first unit, a second unit, a third unit and a fourth unit. According to the invention the at least one sensor provides the control unit with signals concerning an environment of the system. The first unit measures data based on the signals provided by the at least one sensor. The second unit evaluates the data measured by the first unit in order to detect a possible threat associated with a utilization of the system. The input unit provides signals for measuring an action taken by a user. The control unit according to the invention is characterized by the third unit controlling the first output unit via the second interface, such that the third unit causes the first output unit to issue a first warning by an olfactory information via emitting a substance of a first intensity, in the case that the second unit detected a threat associated with the utilization of the system. Furthermore, according to the invention, the fourth unit evaluates the signals provided by the input unit in order to check whether the user acknowledged the first warning, the result of the checking being used for further control of outputting a second warning.

According to a further embodiment of the invention, the third unit causes the first output unit to not emit any further quantity of the substance, in the case that the fourth unit detected that the user acknowledged the first warning. This is of advantage, since in the case that the user acknowledged the first warning, indicating that the user received the warning, there is no further need for issuing any further warning.

According to a further embodiment of the invention, the third unit causes the first output unit to not emit any further quantity of the substance, in the case that the first unit detected that the threat is not present anymore. This is of advantage, since a further warning will be issued only in the case that it is necessary due to a threat being present.

According to a further embodiment of the invention the third unit causes the first output unit to issue a further warning via emitting the substance of an increased intensity, in the case that the fourth unit did not detect that the user acknowledged the first warning. This may preferably be done until the fourth unit detects that the user acknowledges the first or the further warning. This is of advantage, since in the case that the user did not acknowledge the first warning, meaning that he did not receive the first further warning, emitting the substance of an increased intensity raises chances that the user receives the olfactory warning.

According to a further embodiment of the system the control unit comprises a fourth interface for connecting a second output unit to the control unit. The third unit causes the second output unit to issue a visual and/or an acoustic warning in the case that the fourth unit did not detect that the user acknowledged the first or the further warning. This may preferably be done until the fourth unit detects that the user acknowledges the first or the further warning. This is of advantage since in the case since that the user did not receive the first or the further warning through the olfactory information channel, the visual and/or acoustic warning has a higher probability of being received by the user via the visual and/or acoustic information channel.

According to a further embodiment of the system the control unit comprises a fifth interface for connecting a second input unit to the control unit and a memory unit for storing information concerning the issuing of the of the first, the further and the visual and/or acoustic warning. The user may provide information via the second input unit to the control unit concerning in which way a first, a further and the visual and/or acoustic warning should be issued according to his personal preferences. This information may be stored in the memory unit. This is of advantage, since the user may adjust the issuing of warnings according to his personal preferences such that it is more likely that he will associate a warning with a threat.

According to an independent claim a system according to the invention is claimed. The system comprises at least one sensor, a first output unit for emitting a substance of a certain intensity and an input unit providing signals for measuring an action taken by a user. The system is characterized by the at least one sensor being connected to a first interface of a control unit according to the invention, the first output unit being connected to a second interface of the control unit according to the invention and the input unit being connected to a third interface of the control unit according to the invention. The control unit may furthermore be designed according to one of the embodiments of the control unit. The claimed system has the advantages of the procedure for warning a user of a system as claimed according to the invention.

According to a further embodiment the system comprises a second output unit which is connected to a fourth interface of the control unit. The control unit is constructed for issuing a warning in form of a visual and/or acoustic warning. This has the advantage that a warning may be issued via the visual and/or the acoustic information channel in the case that the user did not receive the first warning via the olfactory information channel.

### Description of the Figures

The embodiments of the invention are depicted in the Figures and described in more detail in the following specification.
Figure 1 shows a flow chart of the procedure for warning a user of a system comprising different steps.
Figure 2 shows a flow chart for the procedure for warning a user for system according to a preferred embodiment of the invention.
Figure 3 shows a flow chart for the procedure for warning a user for system according to a further embodiment of the invention.
Figure 4 shows a control unit according to the invention.
Figure 5 shows a control unit according to a preferred embodiment of the invention.
Figure 6 shows a control unit according to a further embodiment of the invention.
Figure 7 shows the content of a memory unit according to a preferred embodiment of the invention.
Figure 8 shows a system according to the invention.
Figure 9 shows a system according to a preferred embodiment of the invention.
Figure 10 shows a system according to a further embodiment of the invention.

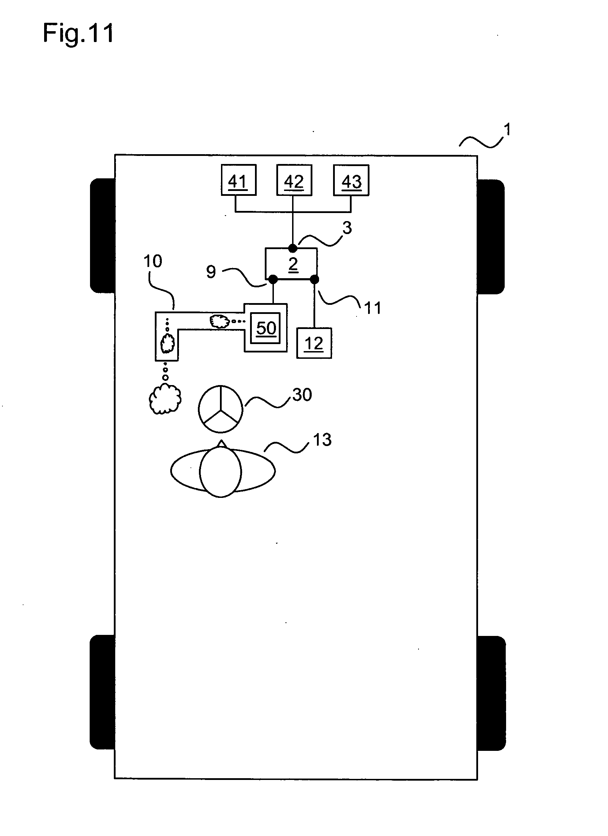

Figure 11 shows a system according to a further embodiment of the invention.
Figure 12 shows a system according to a further embodiment of the invention.
Figure 13 shows a system according to a further embodiment of the invention.

### Embodiments of the invention

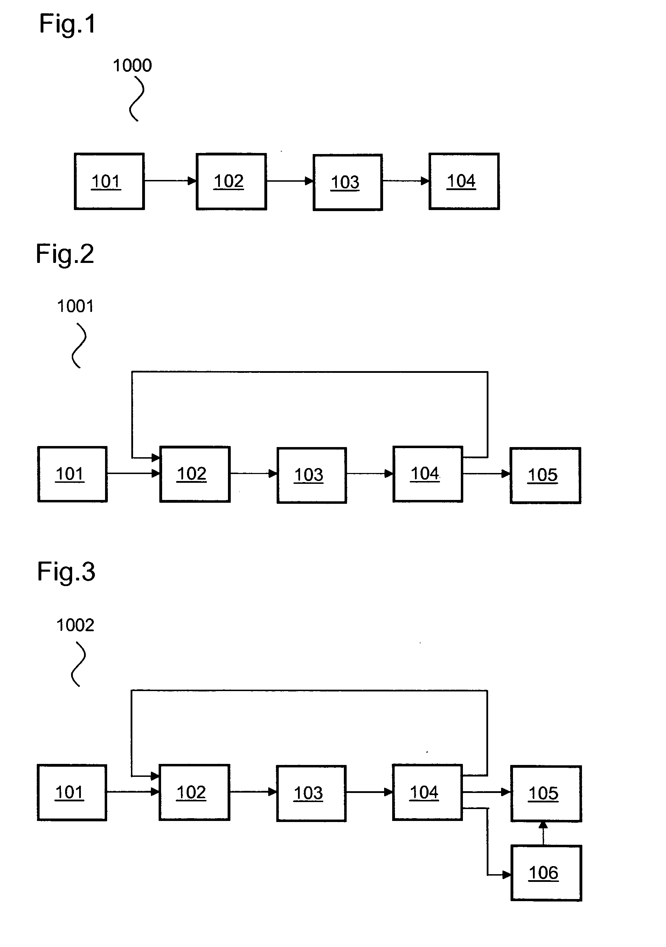

In Figure 1 a flow chart for undertaking different steps of a procedure 1000 for warning a user of a system according to the invention is depicted. In a first procedural step 101 a threat associated with a utilization of the system is detected. In a second procedural step 102 a first warning is issued if a threat has been detected in the first procedural step 101. The first warning is issued by an olfactory information via emitting a substance of a first intensity. In a third procedural step 103 it is checked whether the user acknowledged the first warning by taking an action. The result of the checking is used for further control of outputting a second warning in a fourth procedural step 104.

A further embodiment of the procedure 1001 is shown in Figure 2. After detection of a threat in the first procedural step 101 a warning is issued by an olfactory information in the second procedural step 102. In the third procedural step 103 it is checked whether the user acknowledge the first warning. In the case that the user did acknowledge the first warning by taking an action the procedure 1001 proceeds to a fourth procedural step 104. According to one embodiment of the invention the procedure proceeds to a fifth procedural step 105. In this step the emission of any further quantity of the substance is suppressed in the case that the user 13 did acknowledge the first warning. According to a further embodiment the emission of any further quantity of the substance is suppressed in the case that the threat is not present anymore. In the case that in the third procedural step 103 it is detected that the user did not acknowledge the first warning the flow chart in Figure 2 steps back to the second procedural step 102 in which the substance is emitted of an increased intensity, compared to the first intensity. The procedure then proceeds again to the steps following the second procedural step 102. According to an embodiment the procedural loop given by the repetition via stepping back from the fourth step 104 to the second step 102 and continuing the procedure over again from thereon may by controlled by maximum number of repetitions. The procedural loop may preferably be repeated for an unlimited number of repetitions. According to another embodiment the procedural loop may be repeated only for a certain number of repetitions after which the procedure will continue from the fourth step to the fifth step even if the user did not acknowledge any warning and/or even if the threat is still present.

A further embodiment of the procedure 1002 is shown in Figure 3. According to this embodiment the procedural loop given by the repetition via stepping back from the fourth step 104 to the second step 102 and continuing the procedure over again from thereon is controlled by maximum number of repetitions. The procedural loop is repeated only for a certain number of repetitions after which the procedure will continue from the fourth step 104 directly to the sixth step 106 if the user did not acknowledge the first or any further warning. In the sixth procedural step 106 a visual and/or an acoustic warning is issued to the user. The procedure proceeds from the sixth step 106 to the fifth step 105 in the case that the user acknowledged the first, any further or the visual/acoustic warning. The procedure may furthermore preferably proceed from the sixth step 106 to the fifth step 105 in the case that the warning is not present any more. In the fifth procedural step 105 any warning is suppressed.

Inline with the invention the emitted substance is chosen according to the type of the threat detected in the first procedural step 101. When detecting the presence of a threat in the first procedural step it may be distinguished between different types of threats. When choosing a certain substance to be emitted for a certain type of threat it is possible to provide the user 13 not only with the information that a threat is present but also with the information which type of threat is present.

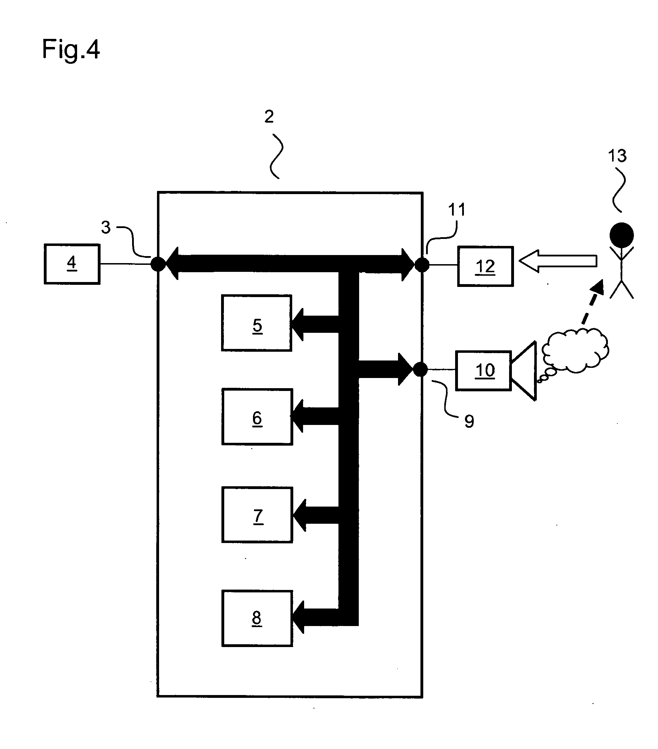

In Figure 4 the control unit 2 according to the invention for undertaking the procedure 1000, 1001, 1002 for warning a user 13 of a system is depicted. The control unit 2 comprises a first interface 3 for connecting the control unit 2 with at least one sensor 4. Furthermore the control unit 2 comprises a second interface 9 for connecting the control unit 2 with the first output unit 10. Furthermore the control unit comprises a third interface 11 for connecting the control unit 2 with an input unit 12. Furthermore the control unit 2 comprises a first unit 5, a second unit 6, a third unit 7 and a fourth unit 8.

According to the invention the at least one sensor 4 provides the control unit 2 with the signals concerning an environment of the system 1. The first unit 5 measures data based on the signals provided by the at least one sensor 4. The second unit 6 evaluates the data measured by the first unit 5 in order to detect a possible threat associated with the utilization of the system 1. The input unit 12 provides signals for measuring an action taking by a user 13. The control unit 2, according to the invention, is characterized by the third unit 7 controlling the first output unit 10 via the second interface 9, such that the third unit 7 causes the first output unit 13 to issue a first warning by an olfactory information via emitting a substance of a first intensity in the case that the second unit 6 detected a threat associated with the utilization of the system 1. Furthermore the control unit 2, according to the invention, is characterized by the fourth unit 8 evaluating the signal provided by the input unit 12 in order to check that the user 13 acknowledged the first warning, the result of the checking being used for the further control of outputting a second warning. The first interface 3, the second interface 9 and the third interface 11 for connecting the control unit 2 with the different devices may be interfaces via connection of electrical wires, serial interfaces, parallel interfaces or other interfaces well known to be used for connection of a control unit 2 with other devices. Furthermore it is possible that the interfaces may be interfaces in form of a USB-Port, a Fire-Wire-Connection, or even interfaces for wireless connections such as Bluetooth or GSM-Connections. According to further embodiments the interfaces may be given by infrared interfaces.

According to a preferred embodiment of the invention, the first unit 5, the second unit 6, the third unit 7, the fourth unit 8, the first interface 3, the second interface 9 and the third interface 11 may be connected via a data-bus-system for interaction such as an IDE-bus, a PCI-bus, a CAN-bus or other bus-systems well known to the expert skilled in the arts of bus-systems.

According to another preferred embodiment of the invention two or more units of the first unit 5, the second unit 6, the third unit 7 and the fourth unit 8 may be combined and therefore given as a single unit.

The first unit 5 for measuring data based on signals provided by the at least one sensor 4 may be a device for analog to digital conversion. Other devices for generating data based on signals provided by sensors may be possible. The second unit 6 for evaluating the data measured by the first unit 5 may be given by a central processing unit CPU on which an algorithm for detecting a possible threat associated with the utilization of the system 1 is carried out. The second unit 6 may further more be given by a video processing unit, a digital signal processor, an ASIC or other electronic devices being able to detect a possible threat associated with the utilization of the system 1.

The third unit 7 controls the first output unit 10 which is connected to the control unit 2 via the second interface 9. In the case that the second unit 6 detects a possible threat, the third unit 7 sends signals to the first output unit 10, such that the first output unit 10 issues a first warning by an olfactory information via emitting a substance of a first intensity. The third unit 7 and the second unit 6 - in one embodiment of the invention - are given by one single unit, in form of an electronic device. After the third unit 7 caused the first output unit 10 via the second interface 9 to issue a first warning, the fourth unit 8 evaluates the signals provided by the input unit 12 via the third interface 11. The signals provided by the input unit 12 are evaluated in such a way, that it is checked whether the user 13 acknowledged the first warning. The result of this checking is used for further control of outputting a second warning.

According to an embodiment of the invention the first unit 5 may not only detect whether or not a threat is present. The first unit 5 may also detect which type of threat is present. Depending on the type of threat the third unit 7 may cause the first output unit 10 to emit a certain substance associated with the detected type of threat. Thus, the third unit 7 may contain more than one substance.

According to an embodiment of the invention the third unit 7 causes the first output unit 10 not to emit any further quantity of the substance, in the case that the fourth unit 8 detected that the user 13 acknowledged the first warning. According to a further embodiment the third unit 7 causes the first output unit 10 not to emit any further quantity of the substance, in the case that the threat is not present anymore.

In the case that the fourth unit 8 did not detect that the user 13 acknowledged the first warning a further warning may preferably be issued. The further warning may be issued by the first output unit 10 via emitting the substance of an increased intensity, compared to the first intensity. This may be undertaken until the fourth unit 8 detects that the user 13 acknowledges the first or the second warning, or until it is detected that the threat is not present any more.

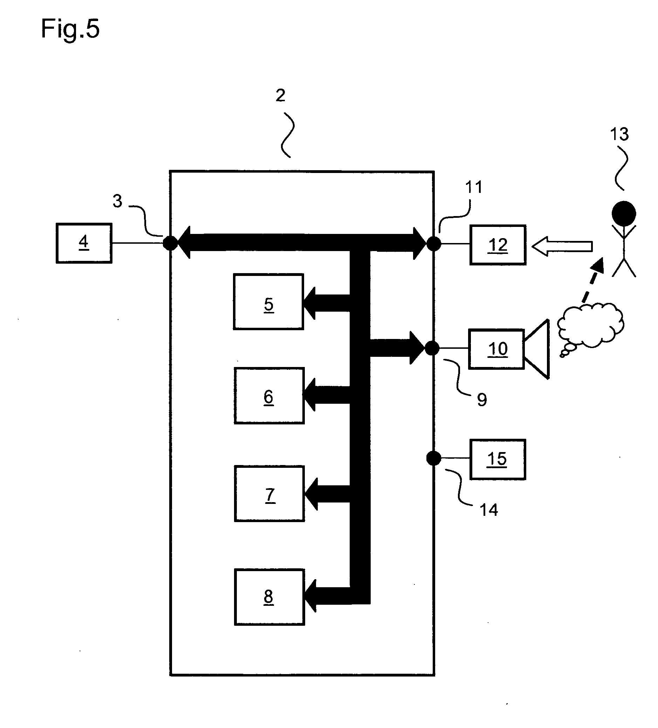

According to a further embodiment - as depicted in Figure 5 - the control unit 2 comprises a fourth interface 14 for connecting a second output unit 15 to the control unit 2. The second output 15 unit may issue a visual and/or acoustic warning. The issuing of the visual/acoustic warning may be undertaken by the fourth unit 8 instructing the second output unit 15 via the fourth interface 14, until the third unit 7 detects that the user 13 acknowledges any warning, or until it is detected that the threat is not present any more.

Preferably, the fourth unit 8 may instruct the second output unit 15 via the fourth interface 14 to issue a visual and/or acoustic warning already together with the first warning. This may preferably be done for conditioning the user in such a way that he will associate the first warning - which is an olfactory warning - with the threat being present. By this, the user will more easily associate an olfactory warning in a later situation with a dangerous situation.

An acknowledgement of any warning via the input unit 12 may be undertaken by the user 13 in different ways. In one embodiment, the input unit 12 may be given in form of a button, which the user 13 presses after noticing the warning. In a different embodiment of the invention the input unit 12 may be given by a switch, which the user 13 flicks in the case that he noticed a warning. Further embodiments of the input unit 12 are possible. The input unit 12 may preferably be a speech recognition interface. The third input unit 12 may furthermore be one or more different sensors being placed in or at the system 1 in order to detect an acknowledgement of the user 13 with the first warning. The input unit 12 may be a sensor at the steering wheel of a car, wherein the sensor - preferably together with a further unit comprised by the control unit 2 - detects whether the user 13 changes the direction of the car. Furthermore the input unit 12 may be a button for the purpose of controlling the system 1.

The at least one sensor 4 may be given by an ultrasonic sensor, video sensor, infrared sensor, light sensor, temperature sensor, inertial sensor (as an accelerometer or a gyrometer), either coupled or not coupled with a navigation system, or other sensors for measuring an environment of a system 1. The at least one sensor 4 may preferably be a sensor measuring a status of a system (e.g. temperature).

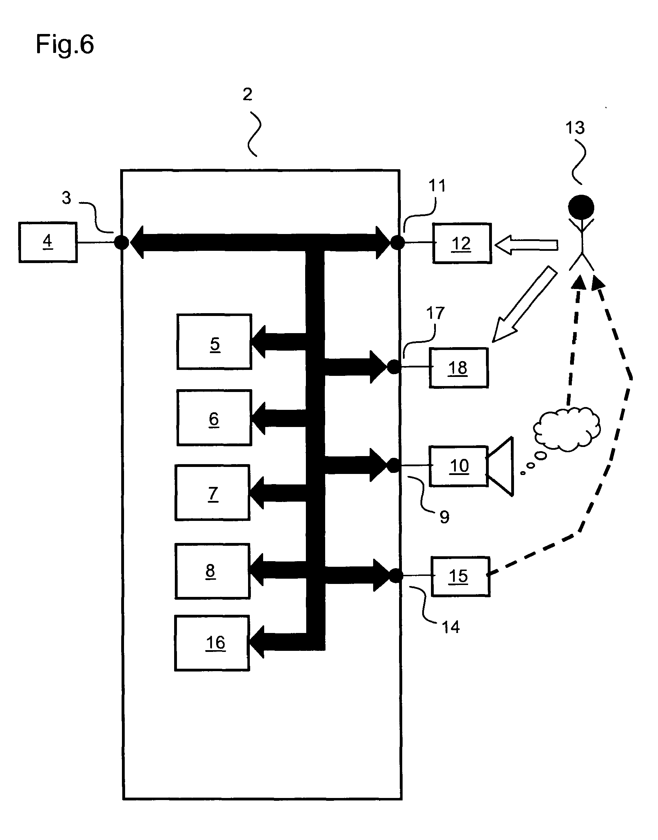

Depicted in Figure 6 is a further embodiment of the control unit 2. The control unit 2 preferably comprises a fifth interface 17 for connecting a second input unit 18 to the control unit 2. The user may initiate the procedure according to the invention or one of the embodiments via simulating the detection of a threat associated wit a utilization of the system 1. The user does so by utilizing the second input unit 18. After initiating the procedure the user will experience a first warning which is issued by an olfactory information via the emission of a substance. By this, the user 13 has the chance to experience an olfactory warning for the purpose of training.

According to a further embodiment the user may enter parameters concerning his personal preferences for the issuing of warnings via the second input unit 18. The second input unit 18 may preferably be given in form of a keyboard, a touch screen or other input devices. The parameters are preferably stored in a memory unit 16 comprised by the control unit.

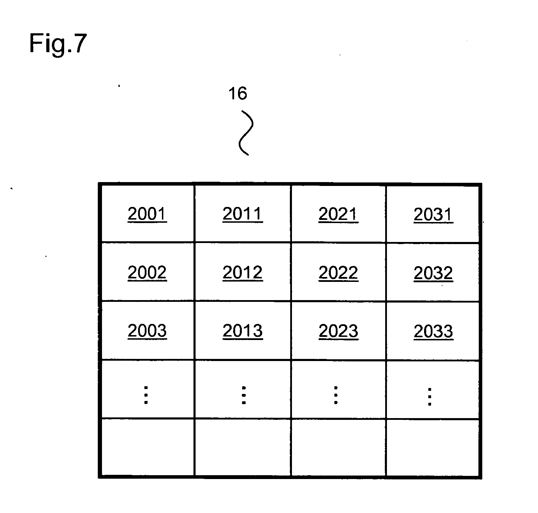

According to this embodiment the parameters concerning the personal preferences for the issuing of warnings are stored in the memory unit 16 as depicted in Figure 7. In a first column the number of the different threats that may be detected by the second unit 6 are stored as a first threat number entry 2001, a second threat number entry 2002, a third threat number entry 2003 and so on. In a second column the number of the certain substance to be emitted in case of a certain threat is stored as a first substance number entry 2011, a second substance number entry 2012, a third substance number entry 2013 and so on. In a third column the number of repetitions for increasing the intensity of a certain substance in the case of a certain threat before issuing a visual an/or acoustic warning is stored as a first number of repetitions 2021, a second number of repetitions 2022, a third number of repetitions 2023 and so on. In a fourth column the type of warning to be issued after the maximum number of repetitions for increasing the intensity of a substance is stored. This information is stored as a first type of visual/acoustic warning 2031, a second type of visual/acoustic warning 2032, a third type of visual/acoustic warning 2033 and so on. These parameters can preferably be set to certain values by the user 13 via the second input unit 18.

According to this embodiment the second unit 6 detects a threat and also detects which type of threat is detected. Depending on the type of threat the third unit 7 checks the memory unit 16 and looks up the number of the threat via the threat number entries 2001, 2002, 2003. Via the substance number entry 2011, 2012, 2013 corresponding to the threat number entry of the detected threat the third unit 7 chooses the substance which is to be emitted as a first warning via the first output unit 10. When outputting the first warning via the first output unit 10 the third unit 7 does so only for a maximum of repetitions for increasing the intensity of the substance as given by the number of repetitions 2021, 2022, 2023 corresponding to the detected threat. In the case that the user 13 did not acknowledge any warning and that the threat is still present, the third unit 7 causes the second output unit 15 to issue a visual and/or acoustic warning. Depending on the type of visual/acoustic warning 2031, 2032, 2033 corresponding to the detected threat the third unit 7 may cause the output unit 15 to issue only a visual warning, only an acoustic warning or a visual and an acoustic warning.

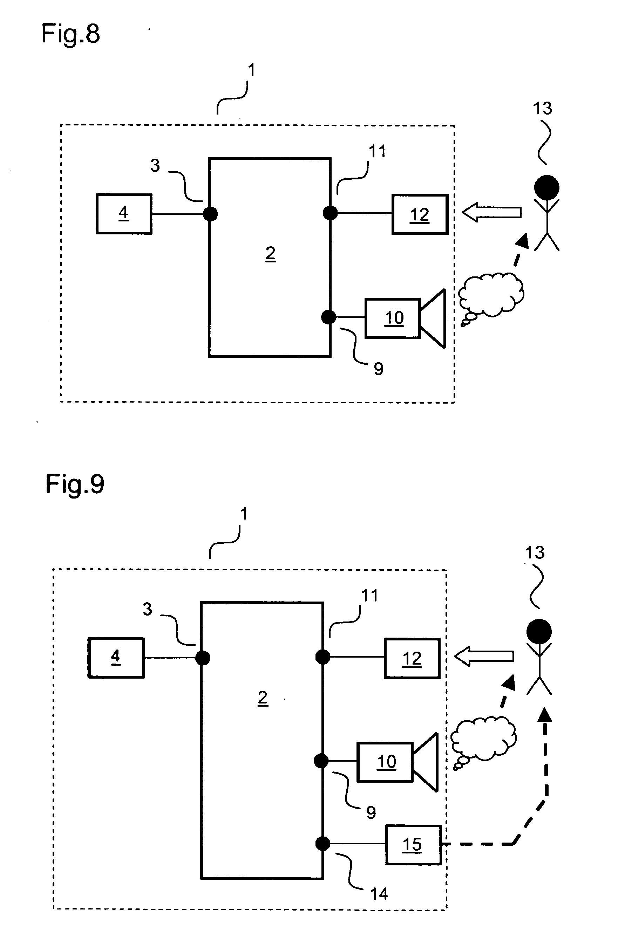

Depicted in Figure 8 is the system 1 which is utilized by the user 13. The system 1 comprises the control unit 2. Furthermore the system 1 comprises at least one sensor 4, an input unit 12 and a first output unit 10. The different devices are connected to the control unit 2 in the previously described way via the different interfaces.

A further embodiment of the system is depicted in Figure 9. In this embodiment a warning is issued in form of an acoustic and/or a visual warning via the second output unit 15 comprised by the system. The second output unit 15 may be given by a display and/or a warning light. Furthermore it is possible that the second output unit 15 may be given by a loudspeaker or a horn.

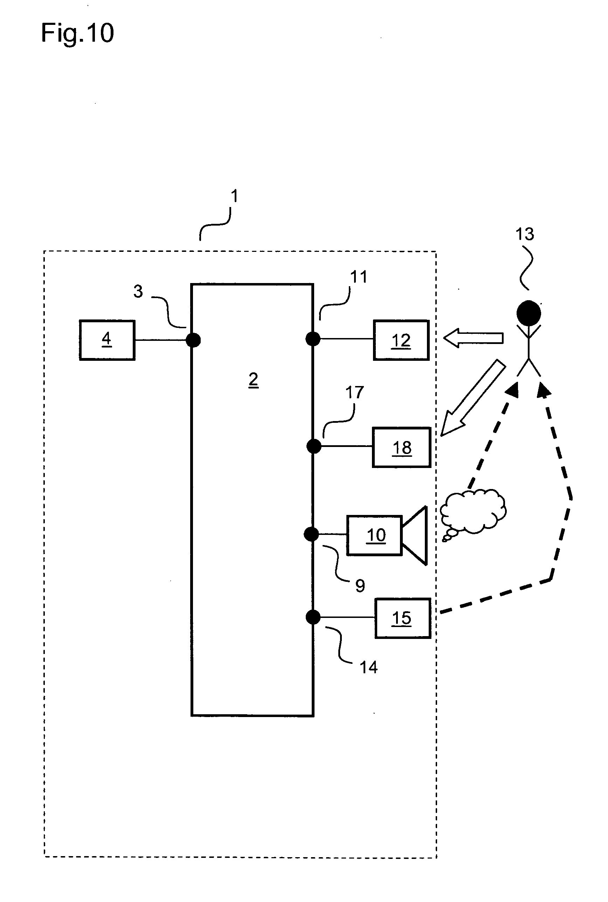

A further embodiment of the system is depicted in Figure 10. In this embodiment the system furthermore comprises a second input unit 18. The input unit 18 may preferably be given as a touchscreen, a keyboard, a voice interface or a different type of input unit.

A first example embodiment of the present invention is depicted in Figure 1. In this example embodiment the system is given in form of a car 1, which, in a preferred embodiment of the invention, contains the control unit 2. The control unit 2 is connected to different sensors 41, 42, 43. The sensors 41, 42, 43 are given in form of an ultrasonic sensor 41, a video sensor 42, and an infrared sensor 43. Furthermore, the car 1 comprises a first output unit in form of a ventilation channel 10 along with a container 50 containing at least one or more substances. The input unit 12 is given in form of a button. The user 13 utilizes the system, in form of the car 1, via handling the steering wheel 30. All devices contained in the car 1 are connected with the control unit 2 in the previously described way.

In the case that the user 13 steers the car 1 into a dangerous situation, the control unit 2 is able to detect a threat associated with the utilization of the car 1 via evaluating the signals of the sensors 41, 42, 43. The control unit 2 does so by utilizing its first unit 5 and its second unit 6. In the case that control unit 2 detects a threat, the control unit 2 causes the first output 10 unit to emit a substance of a first intensity via spreading the substance from the container 50 through the ventilation channel 10. Via evaluating the signals given by the button 12, the control unit 2 detects whether the user 13 acknowledges first warning. The control unit 2 does so by using its fourth unit 8. In the case that the user 13 did acknowledge the warning, or in the case that it is detected that the threat is not present any more, the control unit 2 causes the first output unit 10 to not emit any further quantity of the substance. In the case that the user 13 did not acknowledge, or in the case that it is detected that the threat is not present any more, the first warning the control unit 2 causes an issuing of a further warning. The issuing of the second warning may be undertaken by increasing the intensity for emitting this substance from the first output unit 10.

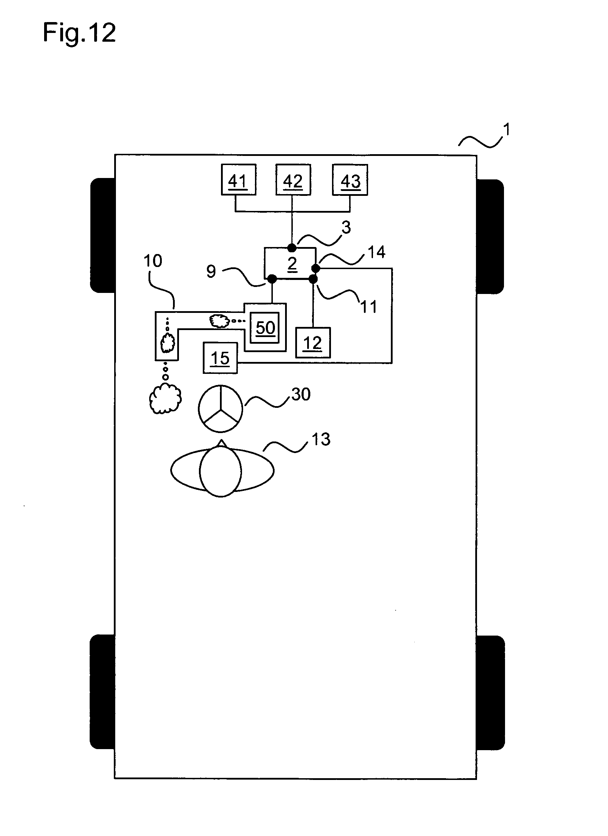

According to Figure 12, in a different embodiment, a warning may be issued via the second output unit 15. This second output unit 15 may be constructed to issue a visual and/or an acoustic warning.

The input unit 12, according to a preferred embodiment, may be given in form of one ore more sensors 41, 42, 43 placed in or at the car 1 providing signals to the control unit 2. These signals may be measured in different places in the car concerning the behavior of the user 13 and/or the car 1.

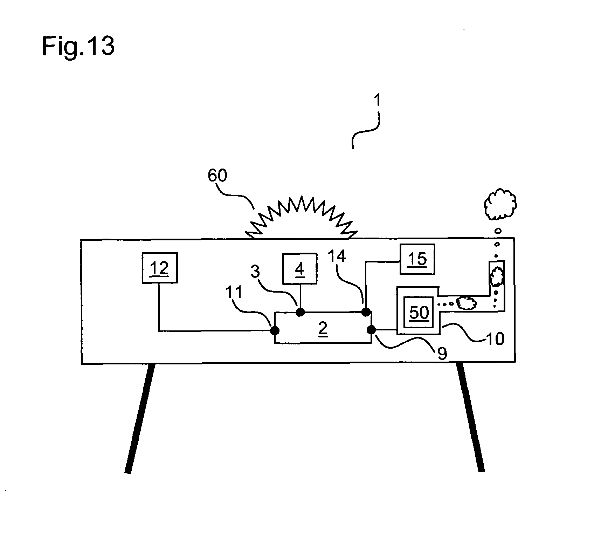

In a second example embodiment of the present invention the system may be given in form of a power tool 1, preferably a table saw, as depicted in Figure 13. In this second example embodiment the power tool 1 comprises a sensor 4. Furthermore, the power tool 1 comprises a first output unit in form of a ventilation channel 10 along with a container 50 containing at least one or more substances. The input unit is given in form of a button 12. The user 13 utilizes the system, in form of the table saw 1. All devices contained in the table saw 1 are connected with the control unit 2 in the previously described way. In a preferred embodiment the power tool 1 furthermore comprises an assembly component in form of a saw blade 60.

In the case that the user 13 uses the table saw 1 in a frequent manner such that the blade 60 of the table saw 1 gets too hot the increase of the increase of the temperature is detected by the control unit 2 via evaluating the signals of the sensor 4. The control unit 2 does so by utilizing its first unit 5 and its second unit 6. In the case that control unit 2 judges the increase of the temperature as a threat, since overheating of the blade 60 may cause fire or explosion, the control unit 2 causes the first output unit to emit a substance of a first intensity via spreading a substance from the container 50 through the ventilation channel 10. Via evaluating the signals given by the button 12, the control unit 2 detects whether the user 13 acknowledges first warning. The control unit 2 does so by using its fourth unit 8. In the case that the user 13 did acknowledge the warning, or in the case that it is detected that the threat is not present any more, the control unit 2 causes the first output unit 10 to not emit any further quantity of the substance. In the case that the user 13 did not acknowledge any warning, or in the case that it is detected that the threat is not present any more, the control unit 2 causes an issuing of a further warning. The issuing of the further warning may be undertaken by increasing the intensity for emitting the substance from the first output unit 10.

In a further embodiment, a warning may be issued via the second output unit 15. This second output unit 15 may be constructed to issue a visual and/or an acoustic warning.

In further embodiments of the invention the system 1 may be given in form of other power tools such as an electric drill, a jigsaw, an electric lawn mower or further kinds of power tools. Furthermore, other kinds of threats caused by a utilization of a power tool may be detected by the control unit 2, such as a drill approaching an electric line in a wall, a low status of a battery, a full lawn bag or even the detection of human or an animal getting too close to the power tool.

## Claims

1. Procedure (1000) for warning a user (13) of a system (1), comprising the steps of
- detecting a threat associated with a utilization of the system (1) in a first procedural step (101),
- issuing a first warning in a second procedural step (102) if a threat has been detected in the first procedural step (101), the first warning being issued by an olfactory information via emitting a substance of a first intensity,
- checking whether the user (13) acknowledged the first warning by taking an action in a third procedural step (103), the result of the checking being used for controlling an issuing of a further warning in a fourth procedural step (104), **characterized by** the emitted substance being chosen according to the type of the threat detected in the first procedural step (101).

2. Procedure (1001) according to claim 1
**characterized by** suppressing the emission of any further quantity of the first substance in the fifth procedural step (105) in the case that the user (13) did acknowledge the first warning.

3. Procedure (1001) according to claim 2,
**characterized by** suppressing the emission of any further quantity of the first substance in the fifth procedural step (105) in the case that the threat is not present anymore.

4. Procedure (1001) according to claim 1 to 3,
**characterized by** issuing the further warning via stepping back to the second procedural step (102) and emitting the first substance of an increased in tensity, compared to the first intensity, in the case that the user (13) did not acknowledge the first warning.

5. Procedure (1002) according to claim 1 to 4,
**characterized by** issuing a visual and/or an
acoustic warning in the sixth procedural step (106) in the case that the user (13) did not acknowledge the first or the further warning.

6. Procedure (1000, 1001, 1002) according to claim 1 to 5 **characterized by** issuing an additional visual and/or acoustic warning together with the first warning in the second procedural step (102).

7. Control unit (2) comprising
- a first interface (3) for connecting the control unit (2) with at least one sensor (4),
- a second interface (9) for connecting the control unit (2) with a first output unit (10),
- a third interface (11) for connecting the control unit (2) with an input unit (12), wherein
- the at least one sensor (4) provides the control unit (2) with signals concerning an environment of a system (1)
- the control unit (2) comprises a first unit (5) for measuring data based on the signals provided by the at least one sensor (4)
- the input unit (12) provides signals for measuring an action taken by a user (13),
- the control unit (2) comprises a second unit (6) for evaluating the data measured by the first unit (5) in order to detect a possible threat associated with a utilization of the system (1),
**characterized by**
- the control unit (2) comprising a third unit (7) for controlling the first output unit (10) via the second interface (9), such that the third unit (7) causes the first output unit (13) to issue a first warning by an olfactory information via emitting a substance of a first intensity in the case that the second unit (6) detected a threat associated with a utilization of the system (1),
- the control unit (2) comprising a fourth unit (8) for evaluating the signals provided by the input unit (12) in order to check whether the user (13) acknowledged the first warning, the result of the checking being used for controlling an output of a further warning,
- the emitted substance being chosen according to the type of the threat detected.

8. Control unit according to claim 7,
**characterized by** the third unit (7) suppressing an emission of any further quantity of the first substance via the first output unit (10), in the case that the fourth unit (8) detected that the user (13) did acknowledge the first warning.

9. Control unit according to claim 8,
**characterized by** the third unit (7) suppressing an emission of any further quantity of the first substance via the first output unit (10), in the case that the threat is not present anymore.

10. Control unit according to claim 7 to 9,
**characterized by** the third unit (7) causing the first output unit (10) to issue a further warning by emitting the first substance of an increased intensity, compared to the first intensity, in the case that the fourth unit (8) did not detect that the user (13) acknowledged the first warning.

11. Control unit according to claim 7 to 10,
**characterized by** a fourth interface (14) for connecting a second output unit (15) to the control unit (2), the third unit (7) causing the second output unit (15) to issue a visual and/or an acoustic warning in the case that the the fourth unit (8) did not detect that the user (13) acknowledged the first or the further warning.

12. System (1) comprising
- at least one sensor (4)
- a first output unit (10) for emitting a substance of a first intensity, the emitted substance being chosen according to the type of a threat
- an input unit (12) providing signals for measuring an action taken by the user (13)
**characterized by**
- the at least one sensor (4) being connected to a first interface (3) of a control unit (2) according to claim 8 to 13
- the first output unit (10) being connected to a second interface (9) of a control unit (2) according to claim 8 to 13
- the input unit (12) being connected to a third interface (11) of a control unit (2) according to claim 7 to 11.

13. System (1) according to claim 12
**characterized by**
- the system (1) comprising a second output unit (15) being constructed for issuing a warning in form of a visual and/or an acoustic warning
- the second output unit (15) being connected to a fourth interface (14) of the control unit (2).

14. System (1) according to claim 12 or 13
**characterized by**
- the system (1) comprising a second input unit (18) for receiving input information from the user (13)
- the second input unit (18) being connected to a fifth interface (17) of the control unit (2).

## Patentansprüche

1. Verfahren (1000) zum Warnen eines Benutzers (13) eines Systems (1) umfassend die folgenden Schritte:
- Detektieren einer mit einer Nutzung des Systems (1) assoziierten Bedrohung in einem ersten Verfahrensschritt (101),
- Ausgeben einer ersten Warnung in einem zweiten Verfahrensschritt (102), falls in dem ersten Verfahrensschritt (101) eine Bedrohung detektiert wurde, wobei die erste Warnung durch eine Geruchsinformation über das Emittieren einer Substanz mit einer ersten Intensität erteilt wird,
- Prüfen in einem dritten Verfahrensschritt (103), ob der Benutzer (13) die erste Warnung bestätigt hat, indem er eine Maßnahme ergriffen hat, wobei das Ergebnis des Prüfens zum Steuern einer Erteilung einer weiteren Warnung in einem vierten Verfahrensschritt (104) verwendet wird, **gekennzeichnet dadurch, dass** die emittierte Substanz gemäß der in dem ersten Verfahrensschritt (101) detektierten Art der Bedrohung gewählt wird.

2. Verfahren (1001) nach Anspruch 1,
**gekennzeichnet durch** das Unterdrücken der Emission einer etwaigen weiteren Menge der ersten Substanz in dem fünften Verfahrensschritt (105) für den Fall, dass der Benutzer (13) die erste Warnung bestätigt hat.

3. Verfahren (1001) nach Anspruch 2,
**gekennzeichnet durch** das Unterdrücken der Emission einer etwaigen weiteren Menge der ersten Substanz in dem fünften Verfahrensschritt (105) für den Fall, dass die Bedrohung nicht mehr vorliegt.

4. Verfahren (1001) nach Anspruch 1 bis 3, **gekennzeichnet durch** das Erteilen der weiteren Warnung über das Zurückgehen zu dem zweiten Verfahrensschritt (102) und Emittieren der ersten Substanz mit einer erhöhten Intensität im Vergleich zu der ersten Intensität für den Fall, dass der Benutzer (13) die erste Warnung nicht bestätigt hat.

5. Verfahren (1002) nach Anspruch 1 bis 4, **gekennzeichnet durch** das Erteilen einer visuellen und/oder einer akustischen Warnung in dem sechsten Verfahrensschritt (106) für den Fall, dass der Benutzer (13) die erste oder die weitere Warnung nicht bestätigt hat.

6. Verfahren (1000, 1001, 1002) nach Anspruch 1 bis 5,
**gekennzeichnet durch** das Erteilen einer zusätzlichen visuellen und/oder akustischen Warnung zusammen mit der ersten Warnung in dem zweiten Verfahrensschritt (102).

7. Steuereinheit (2), umfassend
- eine erste Schnittstelle (3) zum Verbinden der Steuereinheit (2) mit mindestens einem Sensor (4),
- eine zweite Schnittstelle (9) zum Verbinden der Steuereinheit (2) mit einer ersten Ausgabeeinheit (10),
- eine dritte Schnittstelle (11) zum Verbinden der Steuereinheit (2) mit einer Eingabeeinheit (12),
wobei
- der mindestens eine Sensor (4) der Steuereinheit (2) Signale hinsichtlich einer Umgebung eines Systems (1) liefert,
- die Steuereinheit (2) eine erste Einheit (5) umfasst zum Messen von Daten auf der Basis der von dem mindestens einen Sensor (4) gelieferten Signale,
- die Eingabeeinheit (12) Signale zum Messen einer von einem Benutzer (13) ergriffenen Maßnahme liefert,
- die Steuereinheit (2) eine zweite Einheit (6) umfasst zum Auswerten der von der ersten Einheit (5) gemessenen Daten, um eine mit einer Nutzung des Systems (1) assoziierte mögliche Gefährdung zu detektieren,
**gekennzeichnet dadurch, dass**
die Steuereinheit (2) eine dritte Einheit (7) umfasst zum Steuern der ersten Ausgabeeinheit (10) über die zweite Schnittstelle (9), so dass die dritte Einheit (7) bewirkt, dass die erste Ausgabeeinheit (13) eine erste Warnung durch eine Geruchsinformation über das Emittieren einer Substanz mit einer ersten Intensität für den Fall erteilt, dass die zweite Einheit (6) eine mit einer Nutzung des Systems (1) assoziierte Bedrohung detektiert hat,
wobei die Steuereinheit (2) eine vierte Einheit (8) umfasst zum Auswerten der von der Eingabeeinheit (12) gelieferten Signale, um zu prüfen, ob der Benutzer (13) die erste Warnung bestätigt hat, wobei das Ergebnis des Prüfens zum Steuern einer Ausgabe einer weiteren Warnung verwendet wird,
wobei die emittierte Substanz gemäß der detektierten Art der Bedrohung gewählt wird.

8. Steuereinheit nach Anspruch 7,
**gekennzeichnet dadurch, dass** die dritte Einheit (7) eine Emission einer etwaigen weiteren Menge der ersten Substanz über die erste Ausgabeeinheit (10) für den Fall unterdrückt, dass die vierte Einheit (8) detektiert hat, dass der Benutzer (13) die erste Warnung bestätigt hat.

9. Steuereinheit nach Anspruch 8,
**gekennzeichnet dadurch, dass** die dritte Einheit (7) eine Emission einer etwaigen weiteren Menge der ersten Substanz über die erste Ausgabeeinheit (10) für den Fall unterdrückt, dass die Bedrohung nicht mehr vorliegt.

10. Steuereinheit nach Anspruch 7 bis 9,
**dadurch gekennzeichnet, dass** die dritte Einheit (7) bewirkt, dass die erste Ausgabeeinheit (10) eine weitere Warnung erteilt durch Emittieren der ersten Substanz mit einer erhöhten Intensität im Vergleich zu der ersten Intensität für den Fall, dass die vierte Einheit (8) nicht detektiert hat, dass der Benutzer (13) die erste Warnung bestätigt hat.

11. Steuereinheit nach Anspruch 7 bis 10,
**gekennzeichnet durch** eine vierte Schnittstelle (14) zum Verbinden einer zweiten Ausgabeeinheit (15) mit der Steuereinheit (2), wobei die dritte Einheit (7) bewirkt, dass die zweite Ausgabeeinheit (15) eine visuelle und/oder eine akustische Warnung für den Fall erteilt, dass die vierte Einheit (8) nicht detektiert hat, dass der Benutzer (13) die erste oder die weitere Warnung bestätigt hat.

12. System (1), umfassend
- mindestens einen Sensor (4),
- eine erste Ausgabeeinheit (10) zum Emittieren einer Substanz mit einer ersten Intensität, wobei die emittierte Substanz gemäß der Art der Bedrohung gewählt wird,
- eine Eingabeeinheit (12), die Signale zum Messen einer von dem Benutzer (13) ergriffenen Maßnahme liefert,
**dadurch gekennzeichnet, dass**
- der mindestens eine Sensor (4) mit einer ersten Schnittstelle (3) einer Steuereinheit (2) nach Anspruch 8 bis 13 verbunden ist,
- die erste Ausgabeeinheit (10) mit einer zweiten Schnittstelle (9) einer Steuereinheit (2) nach Anspruch 8 bis 13 verbunden ist,
- die Eingabeeinheit (12) mit einer dritten Schnittstelle (11) einer Steuereinheit (2) nach Anspruch 7 bis 11 verbunden ist.

13. System (1) nach Anspruch 12,
**dadurch gekennzeichnet, dass**
- das System (1) eine zweite Ausgabeeinheit (15) umfasst, die so konstruiert ist, dass sie eine Warnung in Form einer visuellen und/oder einer akustischen Warnung erteilt,
- die zweite Ausgabeeinheit (15) mit einer vierten Schnittstelle (14) der Steuereinheit (2) verbunden ist.

14. System (1) nach Anspruch 12 oder 13,
**dadurch gekennzeichnet, dass**
- das System (1) eine zweite Eingabeeinheit (18) zum Empfangen von eingegebenen Informationen von dem Benutzer (13) umfasst,
- die zweite Eingabeeinheit (18) mit einer fünften Schnittstelle (17) der Steuereinheit (2) verbunden ist.

## Revendications

1. Procédure (1000) pour l'avertissement d'un utilisateur (13) d'un système (1), comprenant les étapes consistant à :
- détecter une menace associée à l'utilisation du système (1) lors d'une première étape procédurale (101),
- produire un premier avertissement lors d'une deuxième étape procédurale (102) si une menace a été détectée lors de la première étape procédurale (101), la première menace étant produite par une information olfactive en émettant une substance avec une première intensité,
- vérifier si l'utilisateur (13) a accusé réception du premier avertissement en effectuant une action lors d'une troisième étape procédurale (103), le résultat de la vérification étant utilisé pour commander la production d'un avertissement supplémentaire lors d'une quatrième étape procédurale (104), **caractérisé en ce que** la substance émise est choisie en fonction du type de menace détecté lors de la première étape procédurale (101).

2. Procédure (1001) selon la revendication 1, **caractérisée par** la suppression de l'émission de toute quantité supplémentaire de la première substance lors de la cinquième étape procédurale (105) dans le cas où l'utilisateur (13) n'a pas accusé réception du premier avertissement.

3. Procédure (1001) selon la revendication 2, **caractérisée par** la suppression de l'émission de toute quantité supplémentaire de la première substance lors de la première étape procédurale (105) dans le cas où la menace n'est plus présente.

4. Procédure (1001) selon les revendications 1 à 3, **caractérisée par** la production de l'avertissement supplémentaire en revenant à la deuxième étape procédurale (102) et en émettant la première substance avec une intensité accrue par comparaison à la première intensité dans le cas où l'utilisateur (13) n'a pas accusé réception du premier avertissement.

5. Procédure (1002) selon les revendications 1 à 4, **caractérisée par** la production d'un avertissement visuel et/ou acoustique lors de la sixième étape procédurale (106) dans le cas où l'utilisateur (13) n'a pas accusé réception du premier avertissement ou de l'avertissement supplémentaire.

6. Procédure (1000, 1001, 1002) selon les revendications 1 à 5, **caractérisé par** la production d'un avertissement visuel et/ou acoustique supplémentaire en association avec le premier avertissement lors de la deuxième étape procédurale (102).

7. Unité de commande (2) comprenant :
- une première interface (3) destinée à connecter l'unité de commande (2) à au moins un capteur (4),
- une deuxième interface (9) destinée à connecter l'unité de commande (2) à une première unité de sortie (10),
- une troisième interface (11) destinée à connecter l'unité de commande (2) à une unité d'entrée (12),
dans laquelle
- l'au moins un capteur (4) fournit à l'unité de commande (2) des signaux concernant un environnement d'un système (1),
- l'unité de commande (2) comprend une première unité (5) destinée à mesurer des données basées sur les signaux fournis par l'au moins un capteur (4),
- l'unité d'entrée (12) fournit des signaux destinés à mesurer une action entreprise par un utilisateur (13),
- l'unité de commande (2) comprend une deuxième unité (6) destinée à évaluer les données mesurées par la première unité (5) afin de détecter une éventuelle menace associée à une utilisation du système (1), **caractérisée en ce que**
- l'unité de commande (2) comprend une troisième unité (7) destinée à commander la première unité de sortie (10) par l'intermédiaire de la deuxième interface (9) de telle façon que la troisième unité (7) fasse en sorte que la première unité de sortie (13) produise un premier avertissement sous la forme d'une information olfactive par émission d'une substance avec une première intensité dans le cas où la deuxième unité (6) a détecté une menace associée à une utilisation du système (1),
- l'unité de commande (2) comprend une quatrième unité (8) destinée à évaluer les signaux fournis par l'unité d'entrée (12) afin de vérifier si l'utilisateur (13) a accusé réception du premier avertissement, le résultat de la vérification étant utilisé pour commander la fourniture en sortie d'un avertissement supplémentaire,
- la substance émise est choisie en fonction du type de la menace détectée.

8. Unité de commande selon la revendication 7, **caractérisée en ce que** la troisième unité (7) supprime l'émission de toute quantité supplémentaire de la première substance par l'intermédiaire de la première unité de sortie (10), dans le cas où la quatrième unité (8) a détecté que l'utilisateur (13) n'a pas accusé réception du premier avertissement.

9. Unité de commande selon la revendication 8, **caractérisée en ce que** la troisième unité (7) supprime l'émission de toute quantité supplémentaire de la première substance par l'intermédiaire de la première unité de sortie (10) dans le cas où la menace n'est plus présente.

10. Unité de commande selon les revendications 7 à 9, **caractérisée en ce que** la troisième unité (7) fait en sorte que la première unité de sortie (10) produise un avertissement supplémentaire en émettant la première substance avec une intensité accrue par comparaison à la première intensité dans le cas où la quatrième unité (8) n'a pas détecté que l'utilisateur (13) a accusé réception du premier avertissement.

11. Unité de commande selon les revendications 7 à 10, **caractérisée par** une quatrième interface (14) destinée à connecter une deuxième unité de sortie (15) à l'unité de commande (2), la troisième unité (7) faisant en sorte que la deuxième unité de sortie (15) produise un avertissement visuel et/ou acoustique dans le cas où la quatrième unité (8) n'a pas détecté que l'utilisateur (13) a accusé réception du premier avertissement ou de l'avertissement supplémentaire.

12. Système (1) comprenant :
- au moins un capteur (4),
- une première unité de sortie (10) destinée à émettre une substance avec une première intensité, la substance émise étant choisie en fonction du type de menace,
- une unité d'entrée (12) fournissant des signaux destinés à mesurer une action entreprise par l'utilisateur (13),
**caractérisé en ce que**
- l'au moins un capteur (4) est connecté à une première interface (3) d'une unité de commande (2) selon les revendications 8 à 13,
- la première unité de sortie (10) est connectée à une deuxième interface (9) d'une unité de commande (2) selon les revendications 8 à 13,
- l'unité d'entrée (12) est connectée à une troisième interface (11) d'une unité de commande (2) selon les revendications 7 à 11.

13. Système (1) selon la revendication 12, **caractérisé en ce que**
- le système (1) comprend une deuxième unité de sortie (15) réalisée de manière à produire un avertissement sous la forme d'un avertissement visuel et/ou acoustique,
- la deuxième unité de sortie (15) est connectée à une quatrième interface (14) de l'unité de commande (2).

14. Système (1) selon la revendication 12 ou 13, **caractérisé en ce que**
- le système (1) comprend une deuxième unité d'entrée (18) destinée à recevoir des informations d'entrée de l'utilisateur (13),
- la deuxième unité d'entrée (18) est connectée à une cinquième interface (17) de l'unité de commande (2).
